# EUROPEAN PATENT APPLICATION

(11) **EP 1 146 458 A2**
(43) Date of publication of application: **17.10.2001**
(21) Application number: 01201216.7
(22) Date of filing: 29.03.2001
(51) Int. Cl.: G06F 17/60

(54) **Online organizing method**

(30) Priority: 30.03.2000 JP 2000095929; 27.03.2001 JP 2001089213
(71) Applicant: Sega Corporation, Ohta-ku, Tokyo 144-0043 (JP)
(72) Inventor: Morimoto, Kenjiro, Sega Corporation, Ohta-ku, Tokyo 144-0043 (JP)
(74) Representative: Smith, Peter James

(57) **Abstract**

Game apparatuses 10 of a number of users A, B, C, D, ... are connected to a server 50 through a network. The respective users A, B, C, D, ... have a purpose X or a purpose Y. The server 50 obtain on line from the gate apparatuses 10 personal information of the respective users A, B, C, D, ... connected to the network to structure a database 52 of the personal information. The organizing means 54 selects the users A, B, C, D, ..., based on information of the respective users registered in a database 52 and organizes the users. The game apparatuses of the organized users A, B, C are interconnected by the information sharing means 56 and share the information. The online organizing method can quickly and suitably organize a plurality of participants connected to a network.

## Description

### BACKGROUND OF THE INVENTION

The present invention relates to an online organizing method for organizing a plurality of participants connected to a network.

Owing to the recent development of communication techniques, domestic game apparatuses, personal computers, etc. of respective houses are interconnected with one another by a telephone line or others to thereby form a common network, or terminal apparatuses installed in stores, such as game centers, game cafes, etc. are interconnected with one another by special lines, such as optical fibers, etc. to thereby form a common network. Through such a network, a plurality of participants can chat with one another realtime, and a plurality of game players can take part in a game.

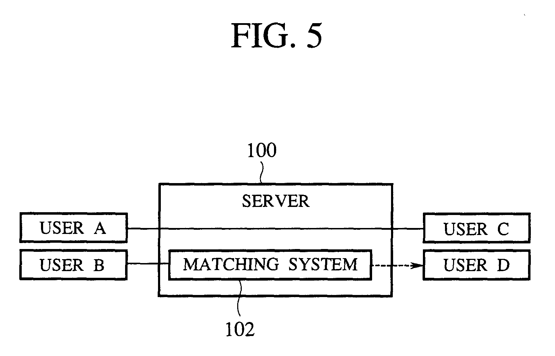

A number of participants take part in a network, and it is necessary to select those of the participants, who are suitable to execute together a task, such as a game or others. One example of matching system for joining specific participants from a number of participants to organize them will be explained with reference to FIG. 5.

A user A, a user B, a user C and a user D are connected to a server 100 on a network. As shown in FIG. 5, the user A and the user C are already organized. In this state, when the user B finds a user with whom the user B will act, the user B accesses to a matching system 102 to make a request "Find a free user". The matching system 102 searches a free user, and when the matching system 102 finds the free user D, the matching system 102 sends an address of the user D to the user B. Then, the user B sends the user D, e.g., a mail "Will you act with me?" When the user D gives an OK, the organization is completed.

Although such matching method is effective for the organization on a network of not so many participants who have a common purpose and will, a large network having a large number of participants having different purposes and wills has too high freedom to make the organization effective. Once organized, an organization tends to be fixed, which is a barrier to participation of new users. The organization is difficult especially on a huge network to which a number of participants globally in respective countries are connected. A method for making the organization effective even on such a huge network is strongly desired.

### SUMMARY OF THE INVENTION

An object of the present invention is to provide an online organizing method for quickly and suitably organizing a plurality of participants connected to a network, and a server and a terminal device for use in the method.

The above-described object is achieved by an online organizing method comprising the steps of: searching personal information of participants of a plurality of terminals connected to a network; selecting the participants, who are compatible with one another, based on the personal information of the participants to organize selected participants; and sharing information by the terminals of the organized participants; and transmitting to the respective terminals control information for carrying out a specific task.

In the above-described online organizing method, it is possible that for collecting on line the information for the organization from the terminals connected to the network, the participants input information by selecting items displayed on the screens to input the information.

The above-described object is achieved by an online organizing method comprising the steps of: searching personal information of participants of a plurality of terminals connected to a network; selecting the participants, who are compatible with one another, based on the personal information of the participants to organize the selected participants; sharing information by the terminals of the organized participants; and transmitting control information for starting a program to be carried out on the terminals from an intervening stage of the program.

In the above-described online organizing method, it is possible that said program is an online game, and said intervening stage is one of stages of the online game.

The above-described object is achieved by a server comprising: organizing means for, based on personal information of participants of a plurality of terminals connected to a network, selecting the participants, who are compatible with one another, to organize the selected participants; and information sharing means for interconnecting the terminals of the organized participants to share information.

In the above-described server, it is possible that said participants organized by the organizing means are supplied as they are to said information sharing means.

In the above-described server, it is possible that said server transmits control information for carrying out a specific task to the terminals of the participants organized by the organizing means.

In the above-described server, it is possible that said specific task is a task for starting a program to be carried out on said plurality of terminals from an intervening stage of the program.

In the above-described server, it is possible that said program is an online game, and said intervening stage is one of stages of the online game.

The above-described object is achieved by a terminal device to be connected to the above-described server, comprising: external memory means for storing personal information of a participant, when the terminal device is connected to the server, the personal information stored in the external memory means is uploaded to the server.

The above-described object is achieved by a terminal device for a network system in which a plurality of the terminal devices are connected to a server, said terminal device transmitting personal information of a user to the server; sharing information through the server among the rest terminal devices organized by the server; and cooperating with the rest terminal devices to carry out a specific task.

In the above-described terminal device, it is possible that said specific task is a task for starting a program to be carried out by said plurality of the terminal devices from an intervening stage of the program.

In the above-described terminal device, it is possible that said program is an online game, and said intervening stage is one of stages of the online game.

The above-described object is achieved by a task carrying out method in which terminal devices connected to a server, comprising the steps of: transmitting personal information of the users of the terminal devices to the server; sharing information through the server among the rest terminal devices organized by the server; and cooperating with the rest terminal devices to carry out a specific task.

As described above, according to the present invention, personal information of the users of a plurality of terminals connected to a network are searched, and based on the personal information of said a plurality of users, those of the users who are compatible with each other are selected and organized in a team to carry out a specific task, whereby said a plurality of users connected to the network can be quickly suitably organized.

### BRIEF DESCRIPTION OF THE DRAWINGS

FIG. 1 is a block diagram of a game apparatus which is used as a terminal device used in the online organizing method according to one embodiment of the present invention.
FIG. 2 is a block diagram of a server for carrying out the online organizing method according to the embodiment of the present invention.
FIG. 3 is a flow chart of the online organizing method according to the embodiment of the present invention.
FIG. 4 is a view detailing the server for carrying out the online organizing method according to the embodiment of the present invention.
FIG. 5 is a view explaining a matching system for matching specific participants for organization.

### DETAILED DESCRIPTION OF THE INVENTION

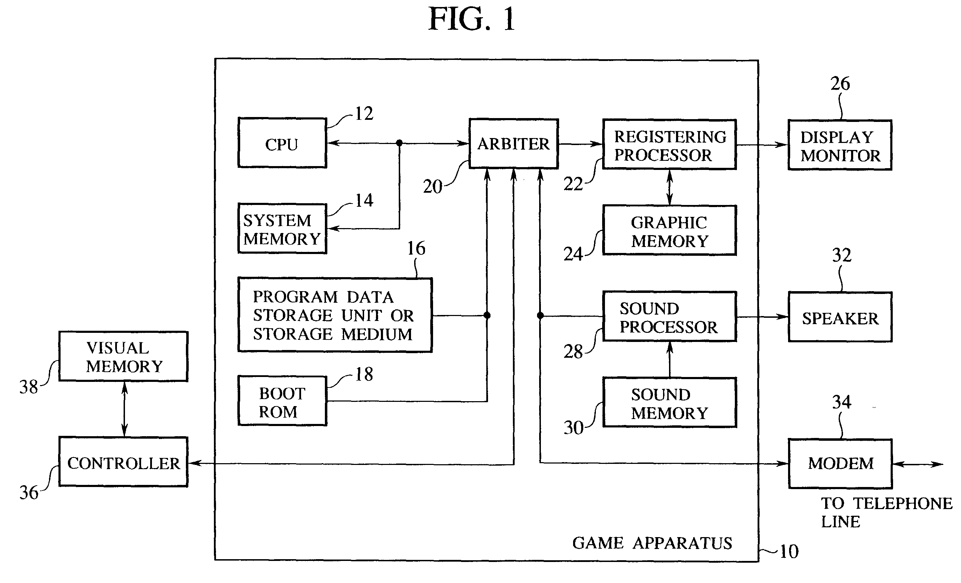

The online organization method according to one embodiment of the present invention will be explained with reference to FIGs. 1 to 4.

The online organizing method according to the present embodiment is used with terminal devices of participants connected on line to a server. First, the terminal device used in the present embodiment will be explained. FIG. 1 is a block diagram of a function of a game apparatus used as the terminal device used in the online organizing method according to the present embodiment.

As shown in FIG. 1, the game apparatus 10 includes: a CPU 12 which executes a game program, controlling a system as general, and performs coordinate computation for image display; a system memory (RAM) 14 used as a buffer memory storing programs and data necessary for the processing by the CPU 12. The CPU and the system memory 14 are connected commonly to a bus line to be connected to a bus arbiter 20. The bus arbiter 20 controls programs and flows of data between the respective blocks of the game apparatus 10 and external peripherals connected to the game apparatus 10.

Furthermore, to the bus arbiter 20 are connected a program data storage unit or storage medium 16 (including an optical disc, or an optical disc drive, etc. for driving a CD-ROM, etc. as a game storage medium) for the game storing the game program and data (including image data and music data), and a BOOTROM 18 storing a program and data for actuating the game apparatus 10.

A rendering processor 22 which, through the bus arbiter 20, reproduces picture (MOVIE) data read from the program data storage unit or the storage medium 16 or producing images for image display in accordance with operations of a game play or advance of the game, and a graphic memory 22 for storing graphic data, etc. necessary for the image production by the rendering processor 22 are connected to each other. Image signals outputted by the rendering processor 22 are converted from digital signals to analog signals by a video DAC (not shown) to be displayed on a display monitor 26.

A sound processor 28 which produces music data read from the program data storage unit or the storage medium 16, or produces effect sounds and sounds corresponding to operations by a game player and progress of the game, and a sound memory 30 which stores sound data, etc. necessary for the sound processor 28 to produce the effect sounds and the sounds are connected to each other through the bus arbiter 20. Sound signals outputted by the sound processor 28 are converted by an audio DAC (not shown) from digital signals to analog signals to be outputted by a speaker 32.

The arbiter 20 also has a function as an interface to be connected to an external communication line, such as a telephone line, etc., through a modem 34. The game apparatus 10 is connected to an Internet through the telephone line and can communicate with other game apparatuses, the network server or others.

The bus arbiter 20 is connected to a controller 36 which outputs to the game apparatus information for controlling the game apparatus 10 and external instruments and tools connected to the game apparatus 10 in accordance with operations by a game player.

The controller 36 is connected to a visual memory 38 as external memory means. The visual memory 38 includes a memory storing various information, and a sub-monitor in the form of a liquid crystal screen.

The modem 34 uses a telephone line and can use a terminal adaptor (TA) or a router using a telephone line, a cable modem using a cable televison line, radio communication means using portable telephones or PHSs ( Personal Handyphone System), optical fiber communication means using optical fibers, or other communication means.

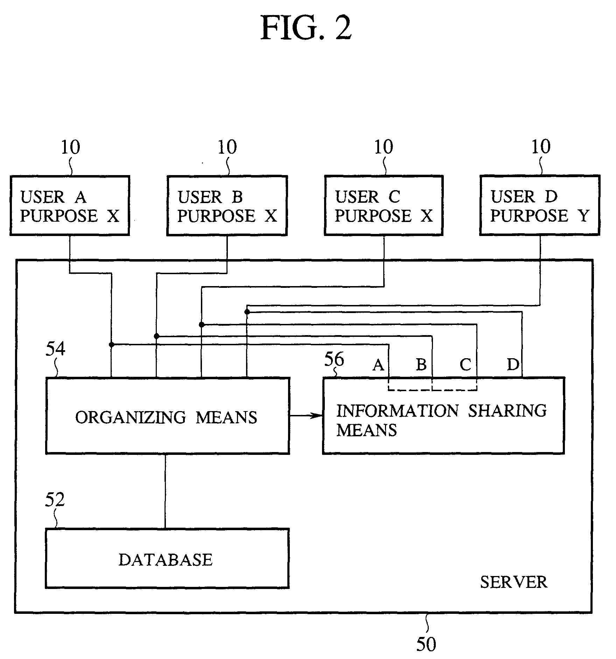

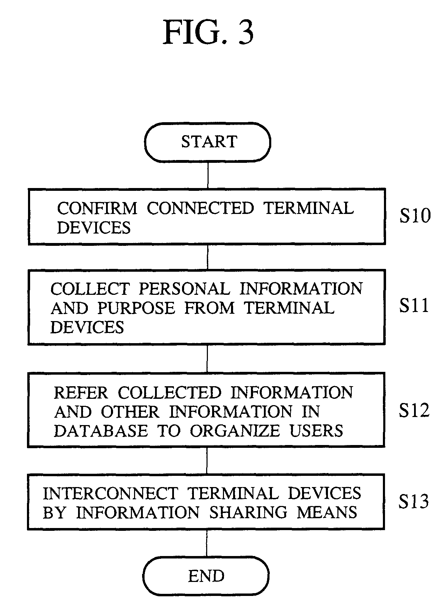

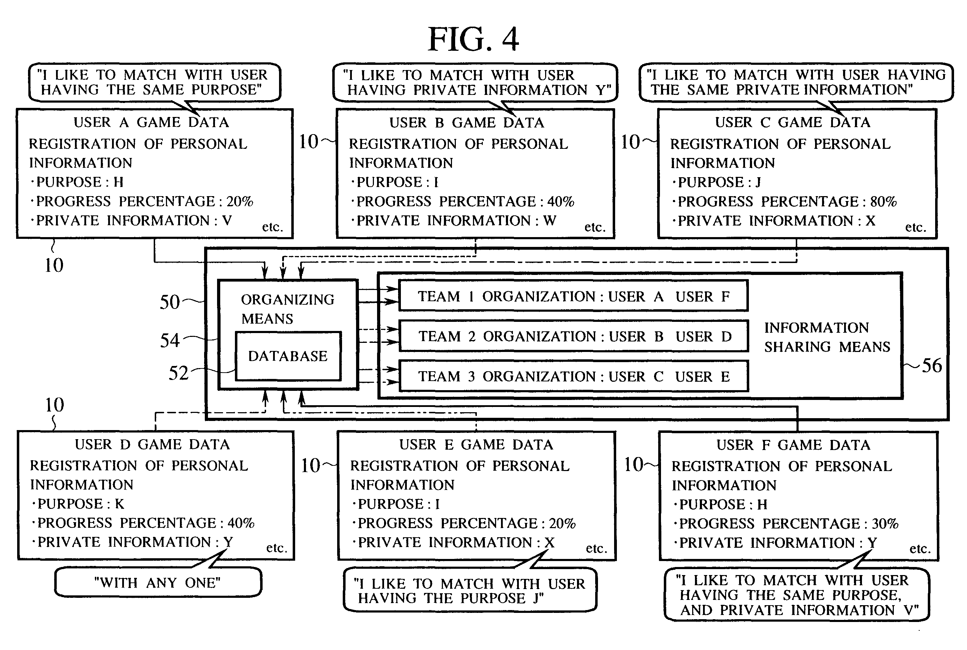

Then, the server of the present embodiment will be explained. FIG. 2 is a block diagram of the server which carries out the online organizing method according to the present embodiment. FIG. 3 is a flow chart of the online organizing method according to the present embodiment. FIG. 4 is a view detaining the server which carries out the online organizing method according to the present embodiment.

As shown in FIG. 2, the game apparatuses 10 of a number of users A, B, C, D, ... are connected to the server 50 through a network. The users A, B, and C respectively have a purposes X, and the user D has a purpose Y. The server 50 obtains from the game apparatuses 10 personal information of the respective users A, B, C, D, ... connected to the network to structure a database 52 of the personal information.

The organizing means 54 selects compatible ones out of the users A, B, C, D, ..., based on their personal information registered in the database 52 of the personal information and organizes the compatible ones. In FIG. 2, the users A, B, and C, who are common in the purpose, are organized by the organizing means 54. The organizing means 54 informs the respective users A, B, and C that they are compatible with one another while supplying the organization information to information sharing means 56. When the respective users A, B, and C give Oks, the information sharing means 56 shares the information of the game apparatuses 10 of the users A, B, and C, and the organization is completed.

When the game apparatuses 10 of the users A, B, and C are organized, the information sharing means 56 transmits control information for carrying out a specific task to the respective game apparatuses 10. The respective game apparatuses 10 receives the control information and carry out the specific task.

When the specific task is an online game, control information for carrying out the online game is transmitted to the respective game apparatuses 10. When the specific task is a task for carrying out the online game from the first stage, control information for carrying out the online game from the first stage. When the specific task is a task for carrying out the online game from an intervening stage, e.g., an adventure game containing a plurality of stages, from an intervening stage, control information for carrying out from the intervening stage is transmitted to the respective game apparatuses 10.

Next, the game apparatus used in the present embodiment will be explained in connection with the above-described server.

As described above, the visual memory 38 as external memory means is connected to the controller 36 of the game apparatus 10. The visual memory 38 stores personal information of game players. When the game apparatus 10 is connected to the server 50 through a communication line, the game apparatus 10 transmits the personal information stored in the visual memory 38 to the server 50.

When game apparatuses 10 are organized by the server 50, each organized game apparatus 10 shares information among the rest organized game apparatuses 10 through the server 50. Each game apparatus 10 carries out a specific task, based on control information transmitted by the server 50.

The organized users as a team carries out a specific common task. Here, the respective users A, B, and C carries out by the game apparatuses 10 a specific common task, e.g., a common game. The game as a specific common task is carried out based on a program stored in the respective game apparatuses 10.

When a specific task is an online game, the respective game apparatuses 10 carry out the common online game, based on control information transmitted by the information sharing means 55. When a specific task is a task which carries out the online game from the first stage, the respective game apparatuses 10 carries out the common online game from the first stage, based on control information transmitted by the information sharing means 55. When a specific task is a task which carries out the online game from an intervening stage, e.g., an adventure game containing a plurality of stages from an intervening stage, the respective game apparatuses 10 carry out the common online game from the intervening stage, based on control information transmitted by the information sharing means 55.

Also after the game apparatuses 10 of the users A, B, C, D, ... are connected to the server 50 through the network, it will be necessary to collect, for the organization, information of the users A, B, C, D, ... connected to the network. To this end, items are displayed on the screens of the game apparatuses 10 or on the screen of the visual memory 38, and the users select ones of the items, whereby the information for the organization can be thus easily inputted. Even with the game apparatuses connected on line, information can be quickly collected.

The above-described online organizing method will be again explained with reference to the flow chart of FIG. 3.

First, the server 50 confirms connected terminal devices (game apparatuses 10) (step S10). Then, the server 50 collects information, such as personal information, purposes, etc. of the respective users from the terminal devices, the game apparatuses 10 (Step S11). Then, the collected information, and other information already structured as the database are referred to so as to organize users (step S12). Next, the game apparatuses 10 of the users organized by the information sharing means are interconnected to share information (step S13).

Thus organized users as a team carry out a game as a common task by the game apparatuses 10. When a specific task is an online game, the respective game apparatuses 10 carry out the common online game. When a specific task is a task which carries out an online game from the first stage, the respective game apparatuses 10 carry out the common online game from the first stage. When a specific task is a task which carries out an online game from an intervening stage, the respective game apparatuses 10 carry out the common online game from the intervening stage.

As described above, according to the present embodiment, the organizing means 54 automatically performs the organization, based on a database 52 of personal information, whereby the organization can be effectively performed even in a huge network to which a number of participants globally of respective countries are connected.

Then, an example of the organization of users will be explained with reference to FIG. 4.

Users A, B, C, D, E, F prepare respective personal information in advance by respective game apparatuses 10 before they are connected to a network. Personal information to be prepared are 1) player name, 2) sex, 3) occupation, 4) age, 5) native place, 6) used language, such as Japanese, English or others, 7) progress percentage of a game, 8) class, 10) purpose for participation, etc. Prepared personal information are registered in the visual memories 38 in the game apparatuses.

Subsequently, when the game apparatuses 10 of the users A, B, C, D, E, F are connected to the server 50 through the network, the personal information registered in the visual memories 38 of the game apparatuses 10 of the users A, B, C, D, E, F are automatically uploaded to the server 50. At this time, requests for organization are also uploaded. It is possible that the server 50 automatically makes access to the game apparatuses 50 of the users A, B, C, D, E, F to download the personal information from the visual memories 38.

As shown in FIG. 4, as game data of the user A, purpose: H, progress percentage: 20%, private information: V, etc. are registered in the database 52. As game data of the user B, purpose: I, progress percentage: 40%, private information: W, etc. are registered in the database 52. As game data of the user C, purpose: J, progress percentage: 80%, private information: X, etc. are registered in the database 52. As game data of the user D, purpose: K, progress percentage: 40%, private information: Y, etc. are registered in the database 52. As game data of the user F, purpose: H, progress percentage: 30%, private information: Y, etc. are registered in the database 52.

A user A's request "I like to match with a user having the same purpose" is registered in the database 52. A user B's request "I like to match with a user having the private information Y" is registered in the database 52. A user C's request "I like to math with a user having the same private information" is registered in the database 52. A user D's request "With any one" is registered in the database 52. A user E's request "I like to match with a user having the purpose J" is registered in the database 52. A user F's request "I like to match with a user having the same purpose, and private information V" is registered in the database 52.

The organizing means 54 organizes the users, based on the private information registered in the database 42. Parameters for the organization are sex, occupation, age, birth place, used language, race, game progress percentage, class, hobby, entry purpose, request, etc. The private information and purposes of the users are automatically retrieved to consider organizing conditions, such as a participant number, users' requests, etc. to organize teams. For example, based on occupation information, users of this occupation and of that occupation are organized in a team; based on sex and progress a percentage, only female users having a progress percentage of 20% are organized in a team; or based on a birth place, a race and a venture purpose, a team for treasure-hunting of androids from Utah state. A wide variety of teams can be organized.

In FIG. 4, based on the user A's request "I like to match with a user having the same purpose", and the user F's request "I like to match with a user having the same purpose and the private information H", the user A having the purpose H and the private information H, and the user F having the same purpose H are organized in Team 1.

Based on the user B's request "I like to match with a user having the private information Y" and the user D's request "With any one", the user B, and the user Y having the private information Y are organized in Team 2.

Based on the user C's request "I like to match with a user having the same private information" and the user E's request "I like to match with a user having the purpose J", the user B having the purpose J and the private information X, and the user E having the private information X are organized in Team 3.

When the teams are thus organized, the information sharing means 56 interconnects the game apparatuses 10 of the users of each organized teams to share the information. The users, who are thus organized and share the information, carry out a game, a common task by the game apparatuses 10.

The present invention is not limited to the above-described embodiment and can cover other various modifications. For example, in the above-described embodiment, the users are organized to form the teams for carrying out tasks, games. However, the present invention may be applied to making organizations for carrying out tasks other than games. The online organizing method according tot he present invention is applicable to forming organizations of any kind other than the organization of the above-described embodiment.

## Claims

1. An online organizing method comprising the steps of:
searching personal information of participants of a plurality of terminals connected to a network;
selecting the participants, who are compatible with one another, based on the personal information of the participants to organize selected participants; and
sharing information by the terminals of the organized participants; and
transmitting to the respective terminals control information for carrying out a specific task.

2. An online organizing method according to claim 1, wherein
for collecting on line the information for the organization from the terminals connected to the network, the participants input information by selecting items displayed on the screens to input the information.

3. An online organizing method comprising the steps of:
searching personal information of participants of a plurality of terminals connected to a network;
selecting the participants, who are compatible with one another, based on the personal information of the participants to organize the selected participants;
sharing information by the terminals of the organized participants; and
transmitting control information for starting a program to be carried out on the terminals from an intervening stage of the program.

4. An online organizing method according to claim 3, wherein
said program is an online game, and said intervening stage is one of stages of the online game.

5. A server comprising:
organizing means for, based on personal information of participants of a plurality of terminals connected to a network, selecting the participants, who are compatible with one another, to organize the selected participants; and
information sharing means for interconnecting the terminals of the organized participants to share information.

6. A server according to claim 5, wherein
said participants organized by the organizing means are supplied as they are to said information sharing means.

7. A server according to claim 5, wherein
said server transmits control information for carrying out a specific task to the terminals of the participants organized by the organizing means.

8. A server according to claim 7, wherein
said specific task is a task for starting a program to be carried out on said plurality of terminals from an intervening stage of the program.

9. A server according to claim 8, wherein
said program is an online game, and said intervening stage is one of stages of the online game.

10. A terminal device to be connected to the server according to claim 5, comprising:
external memory means for storing personal information of a participant,
when the terminal device is connected to the server, the personal information stored in the external memory means is uploaded to the server.

11. An external memory means provided in the terminal device according to claim 10 and storing the personal information of the users.

12. A terminal device for a network system in which a plurality of the terminal devices are connected to a server,
said terminal device transmitting personal information of a user to the server; sharing information through the server among the rest terminal devices organized by the server; and cooperating with the rest terminal devices to carry out a specific task.

13. A terminal device according to claim 12, wherein
said specific task is a task for starting a program to be carried out by said plurality of the terminal devices from an intervening stage of the program.

14. A terminal device according to claim 13, wherein
said program is an online game, and said intervening stage is one of stages of the online game.

15. A task carrying out method in which terminal devices connected to a server, comprising the steps of:
transmitting personal information of the users of the terminal devices to the server;
sharing information through the server among the rest terminal devices organized by the server; and
cooperating with the rest terminal devices to carry out a specific task.

16. A program for a server comprising the steps of:
searching personal information of the participants of a plurality of terminals connected to a network;
selecting the participants, who are compatible with one another, based on the personal information of the participants;
sharing information among the terminals of the organized participants; and
transmitting control information for carrying out a specific task.

17. A program for a terminal device comprising the steps of:
transmitting to a server personal information of users;
sharing information through the server among the rest terminal devices organized by the server; and
cooperating with the rest terminal devices to carry out a specific task.

18. A storage medium storing a program according to claim 16.

19. A storage medium storing a program according to claim 17.
